# EUROPEAN PATENT SPECIFICATION

(11) **EP 2 043 406 B1**
(45) Date of publication and mention of the grant of the patent: **06.06.2012**
(21) Application number: 08253151.8
(22) Date of filing: 26.09.2008
(51) Int. Cl.: H05B 3/28, H05B 3/14, B82Y 30/00, B82Y 15/00

(54) **Plane heat source**
Flache Wärmequelle
Source de chaleur plane

(30) Priority: 28.09.2007 CN 200710077394; 10.10.2007 CN 200710123809; 10.10.2007 CN 200710123813; 25.07.2008 CN 200810142615; 25.07.2008 CN 200810142614; 13.06.2008 CN 200810067731; 11.07.2008 CN 200810068459; 25.07.2008 CN 200810142526; 25.07.2008 CN 200810142529; 25.07.2008 CN 200810142527
(43) Date of publication of application: 01.04.2009
(73) Proprietor: Funate Innovation Technology Co. LTD., Beijing (CN); Hon Hai Precision Industry Co., Ltd., Tu-cheng City, Taipei Hsien (TW)
(72) Inventor: Liu, Chang-Hong, Beijing City (CN); Feng, Chen, Beijing City (CN); Liu, Peng, Beijing City (CN); Jiang, Kai-Li, Beijing City (CN); Wei, Yang, Beijing City (CN); Wang, Ding, Beijing City (CN); Liu, Kai, Haidian District Beijing City (CN); Fan, Shou-Shan, Beijing City (CN)
(74) Representative: Gray, John James

(56) References cited:
- WO-A-2004/023845
- WO-A-2004/082333
- WO-A-2006/122736
- WO-A-2007/089118
- DE-A1-102004 044 352
- DE-A1-102006 014 171
- DE-U1-202005 013 822
- DE-U1-202005 014 678

## Description

### 1. Field of the Invention

The invention generally relates to plane heat sources, and, particularly, to a carbon nanotube based plane heat source.

### 2. Discussion of Related Art

Carbon nanotubes (CNT) are a novel carbonaceous material and have received a great deal of interest since the early 1990s. It was reported in an article by Sumio Iijima, entitled "Helical Microtubules of Graphitic Carbon" (Nature, Vol. 354, Nov. 7, 1991, pp.56-58). CNTs are conductors, chemically stable, and capable of having a very small diameter (much less than 100 nanometers) and large aspect ratios (length/diameter). Due to these and other properties, it has been suggested that CNTs should play an important role in various fields, such as field emission devices, new optical materials, sensors, soft ferromagnetic materials, etc. Moreover, due to CNTs having excellent electrical conductivity, thermal stability, and light emitting property similar to black/blackbody radiation, carbon nanotubes can also be used in the field of heat sources.

A carbon nanotube yarn drawn from an array of carbon nanotubes and electrically connected with two electrodes, emits light, when a voltage is applied between the electrodes. The electrical resistance of the carbon nanotube yarn does not increase as much, as metallic light filaments, with increasing temperature. Accordingly, power consumption, of the carbon nanotube yarn, is low at incandescent operating temperatures. However, carbon nanotube yarn is a linear heat source, and therefore, difficult to use in a plane heat source.

Non-linear plane heat source, generally, includes a quartz glass shell, two or more tungsten filaments or at least one tungsten sheet, a supporting ring, sealing parts, and a supporter. Two ends of each tungsten filament are connected to the supporting ring. In order to form a planar light emitting surface, the at least two tungsten filaments are disposed parallel to each other. The supporting ring is connected to the sealing parts. The supporting ring and the sealing parts are disposed on the supporter, thereby, defining a closed space. An inert gas is allowed into the closed space to prevent oxidation of the tungsten filaments. However, they are problems with the plane heat source: Firstly, because tungsten filaments/sheets are grey-body radiation emitters, the temperature of tungsten filaments/sheets increases slowly, thus, they have a low efficiency of heat radiation. As such, distance of heat radiation transmission is relatively small. Secondly, heat radiation and light radiation are not uniform. Thirdly, tungsten filaments/sheets are difficult to process. Further, during light emission, the tungsten filaments/sheets maybe need a protective work environment.

What is needed, therefore, is a plane heat source having a large area, uniform heat and light radiation. Plane heat sources incorporating carbon nanotube structures are known from WO2007089118, WO2004082333, WO2004023845, DE202005014678U, DE202005013822U, WO2006122736, DE102006014171, and DE102004044352.

### SUMMARY

The invention, defined in the appended claims, provides a plane heat source which includes a first electrode, a second electrode, and a carbon nanotube structure. The first electrode and the second electrode are separately and electrically connected to the carbon nanotube structure. The carbon nanotube structure comprises at least one carbon nanotube film comprising a plurality of carbon nanotubes joined end-to-end and oriented in a same direction.

Other advantages and novel features of the present plane heat source will become more apparent from the following detailed description of present embodiments when taken in conjunction with the accompanying drawings.

### BRIEF DESCRIPTION OF THE DRAWINGS

Many aspects of the present plane heat source can better be understood with reference to the following drawings. The components in the drawings are not necessarily to scale, the emphasis instead being placed upon clearly illustrating the principles of the present plane heat source.

FIG. 1 is a schematic view of a plane heat source, in accordance with the present embodiment.

FIG. 2 is a cross-sectional schematic view of FIG. 1 along a line II-II'.

FIG 3 is a photo of a flocculating carbon nanotube film.

FIG 4 is a Scanning Electron Microscope (SEM) image of a pressing carbon nanotube film of a pressing carbon nanotube including a plurality of carbon nanotubes arranged in the different direction.

FIG 5 is a Scanning Electron Microscope (SEM) image of a pressing carbon nanotube film of a pressing carbon nanotube including a plurality of carbon nanotubes arranged in the same directions.

FIG 6 is a Scanning Electron Microscope (SEM) image of a drawing carbon nanotube film.

Fig 7 is a structural schematic of a carbon nanotube segment.

FIG 8 is a schematic view of a carbon nanotube wire structure in which the carbon nanotube wires parallel with each other.

FIG 9 is a schematic, cross-sectional view of a carbon nanotube wire structure in which the carbon nanotube wires twist with each other.

FIG 10 is a Scanning Electron Microscope (SEM) image of an untwist carbon nanotube wire.

FIG 11 is a Scanning Electron Microscope (SEM) image of a twist carbon nanotube wire.

FIG. 12 is a view of the relationship of the power and the temperature of the heat source in FIG 1.

FIG 13 is a flow chart of a method for making the plane heat source shown in FIG. 1.

FIG. 14 is a schematic view of heating an object using the plane heat source shown in FIG. 1.

FIG. 15 is a cross-sectional schematic view of FIG. 14 along a line XV-XV.

Corresponding reference characters indicate corresponding parts throughout the several views. The exemplifications set out herein illustrate at least one present embodiment of the plane heat source in at least one form, and such exemplifications are not to be construed as limiting the scope of the invention in any manner.

### DETAILED DESCRIPTION OF EXEMPLARY EMBODIMENTS

Reference will now be made to the drawings, in detail, to describe embodiments of the plane heat source.

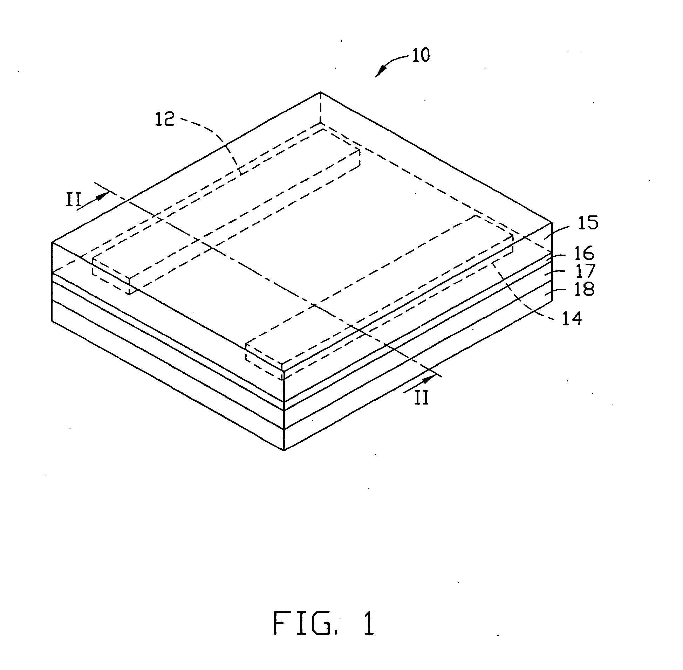

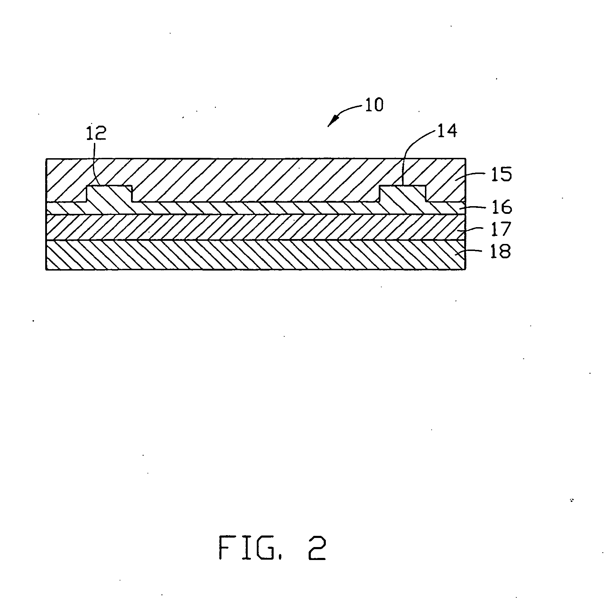

Referring to FIGS. 1 and 2, a plane heat source 10 is provided in the present embodiment. The plane heat source 10 includes a supporter 18, a reflecting layer 17, a carbon nanotube structure 16, a first electrode 12, a second electrode 14, and a protecting layer 15. The reflecting layer 17 is on a surface of the supporter 18, the carbon nanotube structure 16 is on a surface of the reflecting layer 17. The first electrode 12 and the second electrode 14 are separately connected to the carbon nanotube structure 16. In the present embodiment, the first electrode 12 and the second electrode 14 is disposed on the carbon nanotube structure 16 at a certain distance apart and electrically connected thereto.

The material of the supporter 18 is selected from soft materials of rigid material. The soft material can be plastics, resins or fibers. The hard material can be ceramic, glass, and quartz. When the material of the supporter 18 is a soft material, the plane heat source can be curved into any shape according to need. The supporter 18 is used to support the carbon nanotube structure 16 or the reflecting layer 17. The shape and size of the supporter 18 can be determined according to practical needs. For example, the shape of the supporter 18 can be square, round or triangle. In the present embodiment, the supporter 18 is a ceramic substrate. Due to a freestanding property of the carbon nanotube structure 16, the plane heat source 10 can be without the supporter 18. Without the supporter 18, the reflecting layer 17 can be set on the surface of the carbon nanotube structure 16.

The reflecting layer 17 is used to reflect the heat emitted from the carbon nanotube structure 16, and control the heating direction. The heating source 10 with the reflecting layer 17 can be used to heat one side. The reflecting layer can be made of a white and insulative material. The material of the reflecting layer 17 can be selected from the group consisting of metal oxides, metal salts, ceramics, and combinations thereof. In the present embodiment, the reflecting layer 17 is aluminum oxide (Al₃O₂). The thickness of the reflecting layer 17 ranges from about 100 microns to 0.5 millimeter. The reflecting layer 17 is on a surface of the supporter 18. It is to be understood that, the reflecting layer 17 can be between the carbon nanotube structure 16 and the supporter 18. The reflecting layer 17 can be disposed on a surface of the supporter 18, with the surface opposite to the carbon nanotube structure. Namely, the reflecting layer 17 is between the carbon nanotube structure 16 and the supporter 18. It is to be understood that, the reflecting layer 17 is optional. If the carbon nanotube structure 16 is disposed directly on the supporter 18, the plane heat source 10 can be used without the reflecting layer 17 to heat two sides of the plane heat source 10.

The carbon nanotube structure 16 has substantially a uniform thickness and includes a plurality of carbon nanotubes uniformly distributed therein. Further, the carbon nanotubes in the carbon nanotube structure 16 are arranged from the first electrode 22 to the second electrode 24. The carbon nanotube structure 16 includes at least a carbon nanotube film and optionally at least a carbon nanotube wire structure. The carbon nanotube films in the carbon nanotube structure 16 can be arranged side by side and cover the entire surface of the supporter 18. One or more carbon nanotube films can be overlapped or stacked with each other. The carbon nanotube wire structures can be side by side and aligned along a same direction, crossed with each other, or waved to form a layer. If the carbon nanotube structure 16 includes carbon nanotube films and carbon nanotube wire structures, the carbon nanotube wire structures can lie on a surface of the carbon nanotube film.

The carbon nanotube film can be an ordered film in which the carbon nanotubes are primarily oriented along a same direction in each film and substantially parallel to a surface of the carbon nanotube film. Different stratums/layers of films can have the carbon nanotubes offset from the carbon nanotubes in other films. The ordered carbon nanotube film can be a drawing carbon nanotube film. Other types of carbon nanotube film are a flocculating carbon nanotube film and a pressing carbon nanotube film.

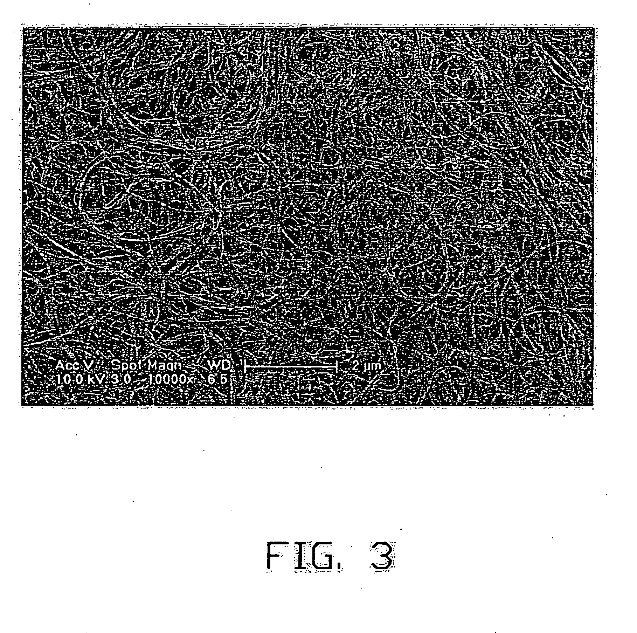

Referring to FIG. 3, a flocculating carbon nanotube film is a carbon nanotube film with a plurality carbon nanotubes therein that are isotropic, uniformly arranged, disordered, and are entangled together. The flocculating carbon nanotube film includes a plurality of micropores formed by the disordered carbon nanotubes. A diameter of the micropores is less than about 100 microns. As such, a specific area of the pressing carbon nanotube film is extremely large. The thickness of the pressing carbon nanotube film ranges from 1 micrometer to 1 millimeter.

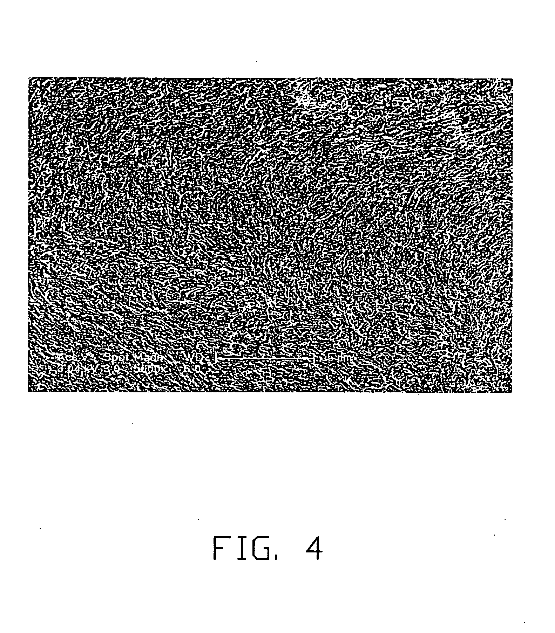

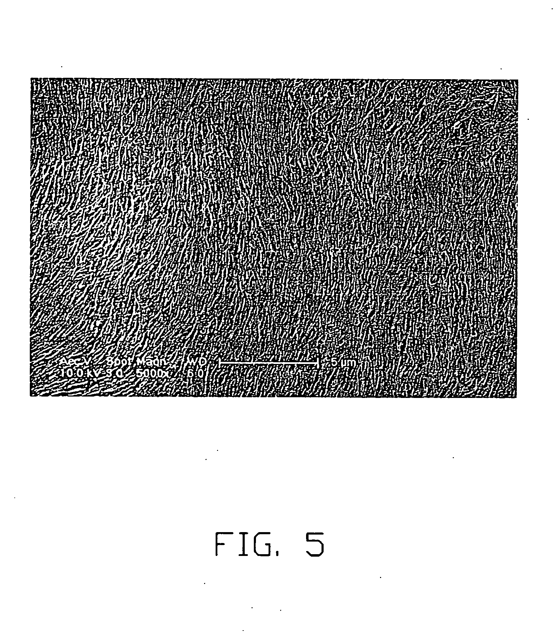

Referring to FIG. 4 and FIG 5, a pressing carbon nanotube film can be a free-standing carbon nanotube film. Further, the carbon nanotubes are substantially parallel to a surface of pressing carbon nanotube film. The carbon nanotubes are selected from the group consisting of the carbon nanotubes isotropically arranged, arranged along a certain direction, or arranged along different directions. An angle between a primary alignment direction of the carbon nanotubes and a surface of the pressing carbon nanotube film is 0 ° to approximately 15 °. The pressing carbon nanotube film can be formed by pressing a carbon nanotube array. The angle is closely related to pressure applied to the carbon nanotube array. The greater the pressure, the smaller the angle. The carbon nanotubes in the pressing carbon nanotube film can parallel to the surface of the pressing carbon nanotube film when the angle is 0 °. The adjacent carbon nanotubes are combined and attracted by van der Waals attractive force, thereby forming a free-standing structure. As such, the pressing carbon nanotube film has good tensile strength, and can, advantageously, be formed into most any desired shape of the anode. The pressing carbon nanotube film includes a plurality of micropores. A diameter of the micropores is less than about 1 micron. As such, a specific area of the pressing carbon nanotube film is extremely large. The thickness of the pressing carbon nanotube film is ranged from 0.5 nanometers to 1 millimeter.

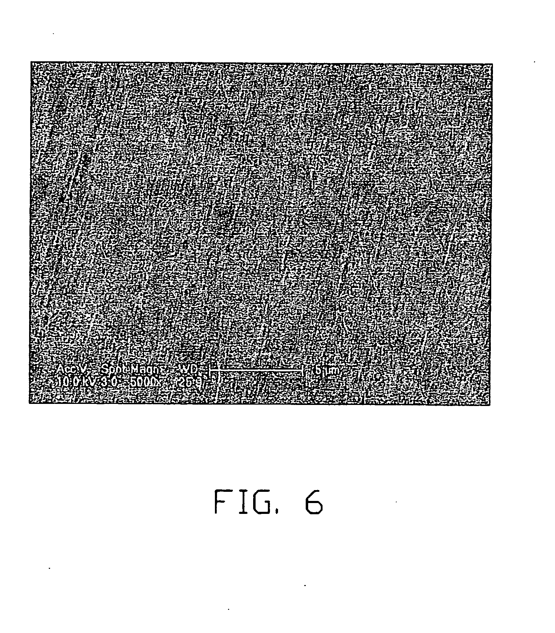

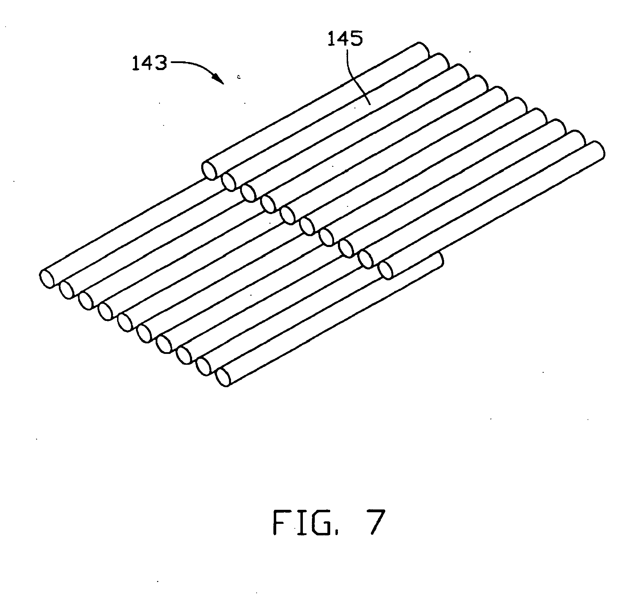

Referring to FIG. 6, the drawing carbon nanotube film includes a plurality of successive carbon nanotubes joined end to end and aligned substantially in the same direction. The majority of carbon nanotubes are arranged along a primary direction; however, the orientation of some of the nanotubes may vary. Referring to FIG. 7, the drawing carbon nanotube film comprises a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in the carbon nanotube segment 143 are also oriented along a preferred orientation.

The drawing carbon nanotube film is drawn from a carbon nanotube array, the carbon nanotubes are combined by van der Waals attractive force. The drawing carbon nanotube film has is adhesive because the carbon nanotubes in the carbon nanotube array has relatively large specific areas. The thickness of the drawing carbon nanotube film is ranged from 0.5 nanometer to 100 microns. When the carbon nanotube structure 16 includes at least two layers of drawing carbon nanotube films, the layers of drawing carbon nanotube film stacked with each other. The angle between the aligned directions of carbon nanotubes in two adjacent layers can be varied arbitrarily.

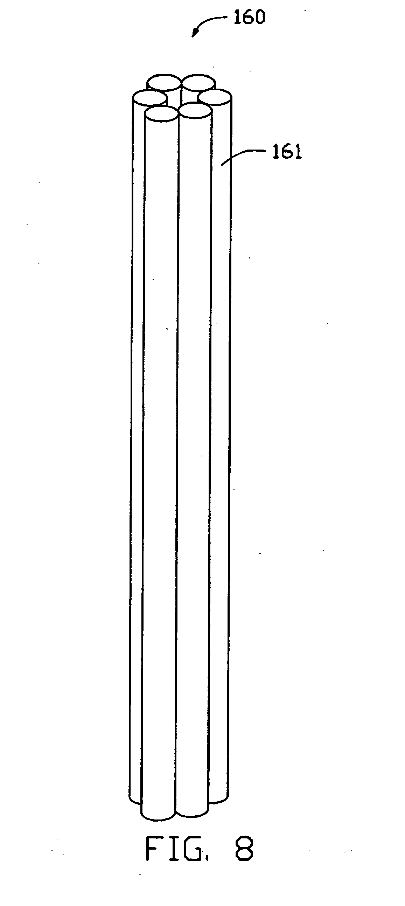

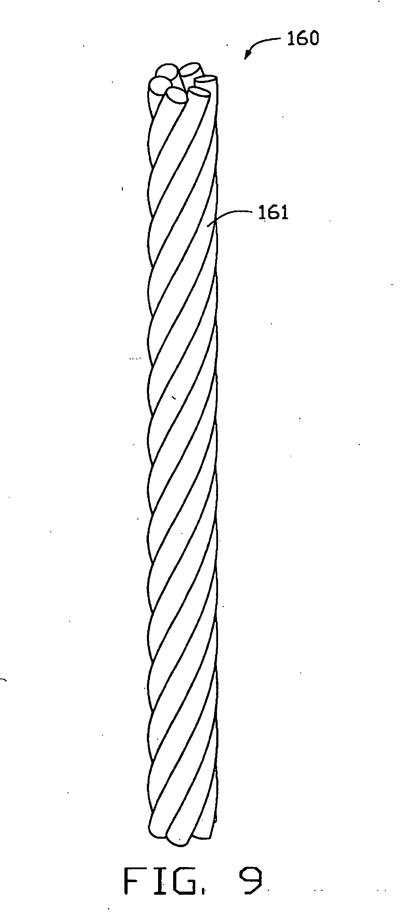

Referring to FIGS. 8 and 9, a carbon nanotube wire structure 160 includes at least one carbon nanotube wire 161. The carbon nanotube wires 161 in the carbon nanotube wire structure 160 can be parallel with each other or twisted with each other. The carbon nanotube wire 161 includes a plurality of successive and oriented carbon nanotubes joined end to end by van der Waals attractive force.

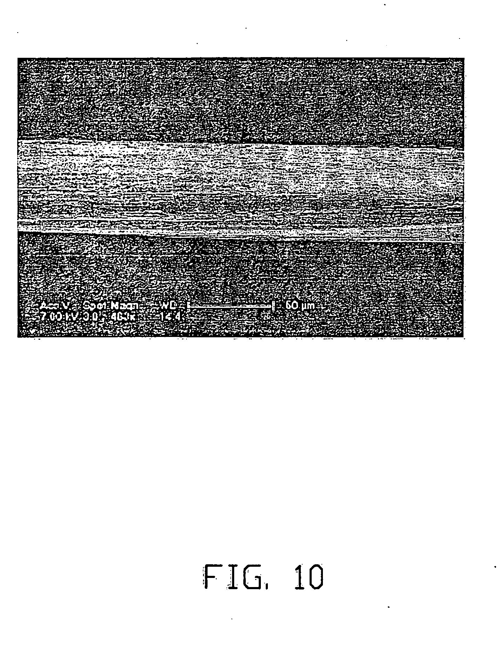

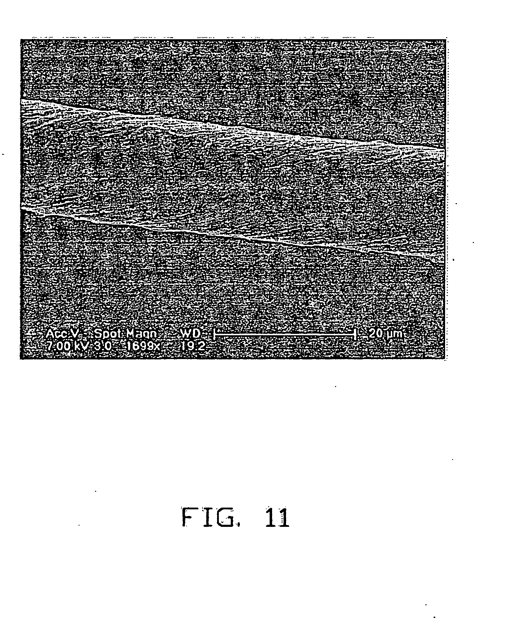

The carbon nanotube wire 161 used can be twisted or untwisted. Referring to FIGS. 10, the untwisted carbon nanotube wire 161 includes a plurality of carbon nanotubes oriented along a same direction (i.e., a direction along the length of the line). Referring to FIG. 11, the twisted carbon nanotube wire 161 includes a plurality of carbon nanotubes oriented around an axial direction of the carbon nanotube wire 161. More specifically, the carbon nanotube wire 161 includes a plurality of successive carbon nanotube segment joined end to end by van der Waals attractive force therebetween. Each carbon nanotube segment includes a plurality of carbon nanotubes parallel to each other, and combined by van der Waals attractive force therebetween. The carbon nanotube segments can vary in width, thickness, uniformity and shape. Length of the carbon nanotube wire 161 can be arbitrarily set as desired. A diameter of the carbon nanotube wire 161 is in an approximate range from 0.5 nanometers to 100 micrometers (µm).

Further, at least part of carbon nanotube wire structures 160 in the carbon nanotube structure 16 is arranged from the first electrode 12 to the second electrode 14, to acquire a maximum current between the first electrode 12 and the second electrode 14.

In the present embodiment, a thickness of the carbon nanotube structure 16 is in an approximate range from 1 micrometer to 2 millimeters. The carbon nanotube structure 16 includes 100 layers of drawing carbon nanotube films stacked with each other. The length of the carbon nanotube structure 16 is about 30 centimeters, the width of the carbon nanotube structure 16 is about 30 centimeters, the thickness of the carbon nanotube structure 16 is about 1 millimeter.

It is to be understood that, the first electrode 12 and the second electrode 14 can be disposed on a same surface or opposite surfaces of the carbon nanotube structure 16. Further, it is imperative that the first electrode 12 and the second electrode 14 are separated by a certain distance to form a certain resistance therebetween, thereby preventing short circuiting of the electrodes. In the present embodiment, because of the adhesive properties of the drawing carbon nanotube film, the first electrode 12 and the second electrode 14 are directly attached to the carbon nanotube structure 16 thereby forming an electrical contact therebetween. Alternatively, the first electrode 12 and the second electrode 14 can be attached on the same surface of the carbon nanotube structure 16 by a conductive adhesive. Quite suitably, the conductive adhesive material is silver adhesive. It should be noted that any other bonding ways may be adopted as long as the first electrode 12 and the second electrode 14 are electrically connected to the carbon nanotube structure 16. The material of the first electrode 12 and the second electrode 14 can be selected from metals, conductive resins, or any other suitable materials. At least one of the first electrode 12 and the second electrode 14 includes carbon nanotube wire structures or carbon nanotube films. In the present embodiment, the first electrode 12 and the second electrode 14 include a carbon nanotube wire or at least a layer of drawing carbon nanotube films.

The protecting layer 15 set on a surface of the carbon nanotube structure 16, in the present embodiment, the protecting layer 15 covers the carbon nanotube structure 16, the first electrode 12 and second electrode 14. The protecting layer 15 can keep the plane heat source 10 insulated from outside. The protecting layer 15 can also protect the carbon nanotube structure 16 from external impurities. The protecting layer 15 is an optional structure.

In a process of using the plane heat source 10, when a voltage is applied to the first electrode 12 and the second electrode 14, the carbon nanotube structure 16 of the plane heat source 10 emits electromagnetic waves with a certain wavelength. Quite suitably, when the carbon nanotube structure 16 of the plane heat source 10 has a fixed surface area (length * width), the voltage and the thickness of the carbon nanotube structure 16 can be used to make the carbon nanotube structure 16 emit electromagnetic waves at different wavelengths. If the voltage is fixed at a certain value, the electromagnetic waves emitting from the carbon nanotube structure 16 are inversely proportional to the thickness of the carbon nanotube structure 16. That is, the greater the thickness of carbon nanotube structure 16, the shorter the wavelength of the electromagnetic waves. Further, if the thickness of the carbon nanotube structure 16 is fixed at a certain value, the greater the voltage applied to the electrode, the shorter the wavelength of the electromagnetic waves. As such, the plane heat source 10, can easily be configured to emit a visible light and create general thermal radiation or emit infrared radiation.

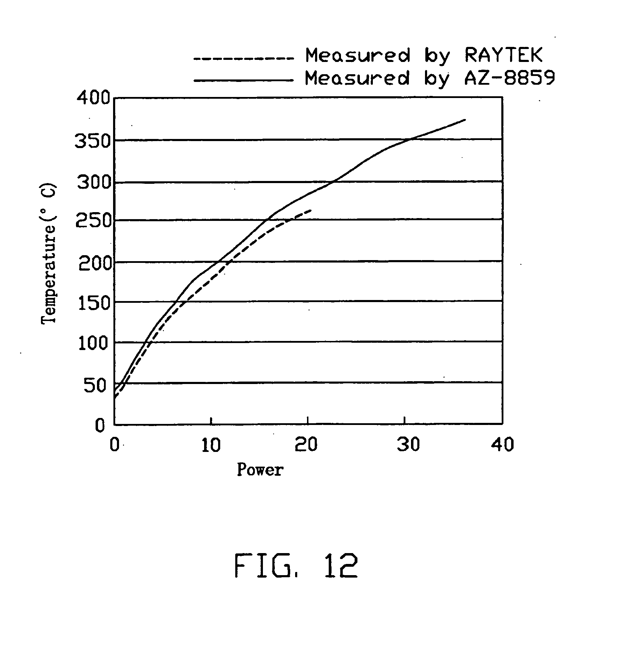

As such, due to carbon nanotubes having an ideal black body structure, the carbon nanotube structure 16 has excellent electrical conductivity, thermal stability, and high thermal radiation efficiency. The plane heat source 10 can be safely exposed, while working, to oxidizing gases in a typical environment. The plane heat source 10 can eradiate an electromagnetic wave with a long wavelength when a voltage is applied on the plane heat source 10. The voltage is arranged from 10 volt to 30 volt. The temperature of the plane heat source 10 is ranged from 50 °C to 500 °C. As an ideal black body structure, the carbon nanotube structure 16 can eradiate heat when it reach a temperature of 200 °C to 450 °C. The efficiency of the eradiating is relatively high. Thus, the plane heat source 10 can be used as electric heaters, infrared therapy devices, electric radiators, and other related devices. Referring to FIG. 12, when a power of 36 watt is applied on the plane heat source 10, the plane heat source 10 is in a temperature of about 370 °C.

Further, the plane heat source 10 can be disposed in a vacuum device or a device with inert gas filled therein. When the voltage is increased in the approximate range from 80 volts to 150 volts, the plane heat source 10 emits electromagnetic waves having a relatively short wave length such as visible light (i.e. red light, yellow light etc), general thermal radiation, and ultraviolet radiation. The temperature of the plane source 10 can reach 1500 °C. As the voltage on the plane heat source 10 becomes higher, the plane heat source 10 can eradiate ultraviolet to kill bacteria. Thus, the plane heat source 10 can be used as an optical device, and thereby being used as light sources, displays, and other related devices.

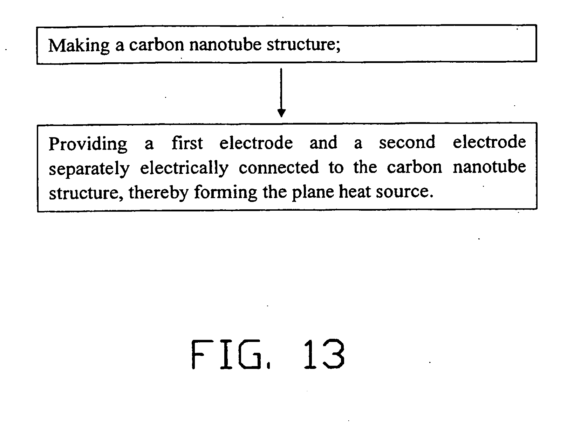

Referring to FIG. 13, a method for making the above-described plane heat source 10 are provided in the present embodiment. The method includes the steps of: (a) making a carbon nanotube structure 16; and (b) providing a first electrode 12 and a second electrode 14 separately and electrically connected to the carbon nanotube structure 16.
It is to be understood that, before step (b), additional steps of providing a supporter 18 and forming a reflecting layer 17 on the supporter 18 can be further processed. After step (b), an additional step of forming a protecting layer 15 on the carbon nanotube structure 16, the first electrode 22 and the second electrode 24. The reflecting layer 17 and the protecting layer 15 can be form by a sputtering method or a coating method.

In step (a), the carbon nanotube structure 16 includes carbon nanotube films and carbon nanotube wire structures 160.

In step (a), the method of making a drawing carbon nanotube film includes the steps of: (a1) providing an array of carbon nanotubes; (a2) pulling out at least a drawing carbon nanotube film from the carbon nanotube array.

In step (a1), the method of providing an array of carbon nanotubes can be formed by the steps of: (a11) providing a substantially flat and smooth substrate; (a12) forming a catalyst layer on the substrate; (a13) annealing the substrate with the catalyst at a temperature in the approximate range of 700°C to 900°C in air for about 30 to 90 minutes; (a14) heating the substrate with the catalyst at a temperature in the approximate range from 500°C to 740°C in a furnace with a protective gas therein; and (a15) supplying a carbon source gas to the furnace for about 5 to 30 minutes and growing a super-aligned array of the carbon nanotubes from the substrate.

In step (a11), the substrate can be a P or N-type silicon wafer. Quite suitably, a 4-inch P-type silicon wafer is used as the substrate.

In step (a12), the catalyst can be made of iron (Fe), cobalt (Co), nickel (Ni), or any combination alloy thereof.

In step (a14), the protective gas can be made up of at least one of nitrogen (N2), ammonia (NH3), and a noble gas. In step (a5), the carbon source gas can be a hydrocarbon gas, such as ethylene (C2H4), methane (CH4), acetylene (C2H2), ethane (C2H6), or any combination thereof.

In step (a2), the drawing carbon nanotube film can be formed by the steps of: (a21) selecting one or more carbon nanotubes having a predetermined width from the array of carbon nanotubes; and (a22) pulling the carbon nanotubes to form nanotube segments at an even/uniform speed to achieve a uniform carbon nanotube film.

In step (a21) the carbon nanotube segment includes a plurality of carbon nanotubes parallel to each other. The carbon nanotube segments 143 can be selected by using an adhesive tape as the tool to contact the super-aligned array of carbon nanotubes. In step (b2), the pulling direction is substantially perpendicular to the growing direction of the super-aligned array of carbon nanotubes.

More specifically, during the pulling process, as the initial carbon nanotube segments are drawn out, other carbon nanotube segments are also drawn out end to end due to van der Waals attractive force between ends of adjacent segments. This process of drawing ensures a substantially continuous and uniform carbon nanotube film having a predetermined width can be formed. Referring to FIG. 6, the carbon nanotube film includes a plurality of carbon nanotubes joined ends to ends. The carbon nanotubes in the carbon nanotube film are all substantially parallel to the pulling/drawing direction of the carbon nanotube film, and the carbon nanotube film produced in such manner can be selectively formed to have a predetermined width. The carbon nanotube film formed by the pulling/drawing method has superior uniformity of thickness and conductivity over a typical disordered carbon nanotube film. Further, the pulling/drawing method is simple, fast, and suitable for industrial applications.

The width of the drawing carbon nanotube film depends on a size of the carbon nanotube array. The length of the drawing carbon nanotube film can arbitrarily be set as desired. In one useful embodiment, when the substrate is a 4 inch type wafer as in the present embodiment, a width of the carbon nanotube film is in an approximate range from 1 centimeter to 10 centimeters, a thickness of the drawing carbon nanotube film is in an approximate range from 0.5 nanometers to 100 microns.

It is noted that, because the carbon nanotubes in the super-aligned array have a high purity and a high specific surface area, the carbon nanotube film is adhesive. As such, the at least one carbon nanotube film can be directly adhered directly to the reflecting layer 17 and/or another carbon nanotube film. In the alternative, other bonding means can be applied.

The carbon nanotube films can be adhered to the reflecting layer 17 along a same direction or different directions. If the carbon nanotube films are adhered along a same direction, the carbon nanotubes of the carbon nanotube layer are arranged along the same direction. When the carbon nanotube films are adhered along different directions, an angle α between the alignment directions of the carbon nanotubes in each two adjacent carbon nanotube films is in the range 0 < α ≦ 90°.

In the step (a), a carbon nanotube wire structure can be made by the following steps: (a1"') making a drawing carbon nanotube film; (a2"') treating the drawing carbon nanotube film to form a carbon nanotube wire; (a3"') making carbon nanotube wire structure with the carbon nanotube wire.

In the step (a2"'), the drawing carbon nanotube film is treated with a organic solvent to form an untwisted carbon nanotube wire or is twisted by a mechanical force (e.g., a conventional spinning process) to form a twisted carbon nanotube wire. The organic solvent is volatilizable and can be selected from the group consisting of ethanol, methanol, acetone, dichloroethane, and chloroform. Quite suitably, the organic solvent is dropped on the drawing carbon nanotube film through a dropping tube in the present embodiment. After soaking in the organic solvent, the carbon nanotube segments in the carbon nanotube film can at least partially compact/shrink into carbon nanotube wires due to the surface tension of the organic solvent.

It is to be understood that when the width of the drawing carbon nanotube film is relatively small, step (a2"') can be omissible to acquire a carbon nanotube wire in an untwisted shape. In this situation, viewed microscopically, the carbon nanotube structure is a flat film, and viewed macroscopically, the carbon nanotube structure is a long wire.

In the step (a3"'), at least one of the carbon nanotube wires are keep together to form a carbon nanotube wire structure. The carbon nanotube wires in the carbon nanotube wire structure are parallel with each other or twisted with each other.

In the step (a), the drawing carbon nanotube film, the pressing carbon nanotube film, the pressing carbon nanotube film, the flocculating carbon nanotube film, or the carbon nanotube wire structure can be overlapped, stacked with each other, or disposed side by side to make a carbon nanotube structure 16.

In step (b), when the first electrode 12 and the second electrode 14 are metals, the first electrode 12 and the second electrode 14 can be formed on the surface of the carbon nanotube structure 16 be sputtering method or coating method. Further, silver paste can be applied on the surface of the carbon nanotube structure 16 directly to form the first and second electrode 12, 14. Further, carbon nanotube layers can be adhered on the surface of the carbon nanotube structure 16 to form the first and second electrode 12, 14.

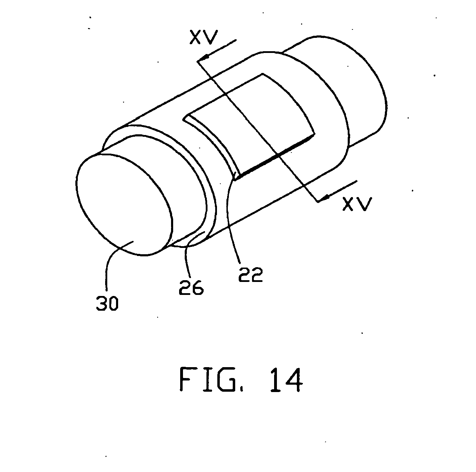

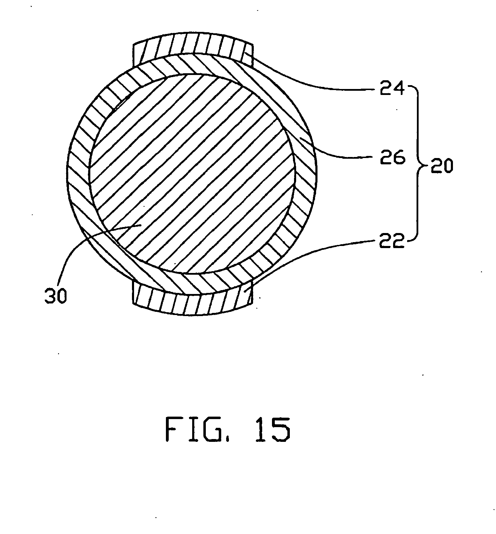

Referring to FIGS 14 and 15, a method for heating an object using the above-described plane heat source 20 is also described. In the present embodiment, the plane heat source 20 includes a first electrode 22, a second electrode 24, and a carbon nanotube film 26. Further, the first electrode 24 and the second electrode 26 are separately disposed on the carbon nanotube film 26 at a certain distance apart and electrically connected thereto.

Further, the surface area of the carbon nanotube film 26 is 900 square centimeters. Specifically, both the length and the width of the carbon nanotube film 26 are 30 centimeters. The carbon nanotube structure 16 includes a drawing carbon nanotube film. The voltage applied to the electrode 12 and the electrode 14 is 15 volts. The temperature of the plane heat source 10 is about 300 °C.

Due to the carbon nanotube film 26 having a free-standing property, the plane heat source 20 can be without a supporter. Because the carbon nanotube film 26 has excellent tensile strength, the plane heat source 10 can have a ring-shaped carbon nanotube film 26. In the process of heating the object 30, the object 30 and the carbon nanotube film 26 can be in direct contact with each other or may be separate from each other, at a certain distance, as required.

The method for heating an object using the plane heat source 20 includes the steps of: providing an object 30; disposing a carbon nanotube layer 26 of the plane heat source 20 to a surface of the object 30; and applying a voltage between the first electrode 22 and the second electrode 24 to heat the object 30.

Finally, it is to be understood that the above-described embodiments are intended to illustrate rather than limit the invention. Variations may be made to the embodiments without departing from the scope of the invention as claimed. The above-described embodiments illustrate the scope of the invention but do not restrict the scope of the invention.

## Claims

1. A plane heat source (10) comprising:
a carbon nanotube structure (16); and
at least two electrodes (12, 14) separately and electrically connected to
the carbon nanotube structure,
wherein the carbon nanotube structure comprises at least one carbon nanotube film comprising a plurality of carbon nanotubes joined end-to-end and oriented in a same direction.

2. A plane heat source as claimed in claim 1, wherein the carbon nanotubes are distributed uniformly in the carbon nanotube structure.

3. A plane heat source as claimed in claim 1 or 2, wherein a thickness of the carbon nanotube film ranges from 0.5 nanometers to 100 nanometers.

4. A plane heat source as claimed in claim 1, 2 or 3, wherein the carbon nanotube structure (16) comprises a plurality of carbon nanotube films stacked with each other.

5. A plane heat source as claimed in claim 4, wherein the aligned directions of the carbon nanotubes of two adjacent carbon nanotube films are the same.

6. A plane heat source as claimed in claim 4, wherein an angle exists between the aligned directions of the carbon nanotubes of two adjacent carbon nanotube films and the angle is in the range from above 0° to 90°.

7. A plane heat source as claimed in any preceding claim, wherein the carbon nanotube structure further comprises a carbon nanotube wire structure (160) disposed on a surface of the at least one carbon nanotube film, and wherein the carbon nanotube wire structure comprises at least one carbon nanotube wire (161) which comprises a plurality of successive and oriented carbon nanotubes joined end-to-end by van der Waals attractive force therebetween.

8. A plane heat source as claimed in claim 7, wherein the carbon nanotubes in the at least one carbon nanotube wire (161) are substantially aligned along a length direction of the at least one carbon nanotube wire.

9. A plane heat source as claimed in claim 6 or 7 wherein the at least two electrodes (12, 14) are disposed on the carbon nanotube structure, and the carbon nanotubes in the carbon nanotube wires are arranged from one electrode to the other so as to maximize current flow between the electrodes.

10. A plane heat source as claimed in any preceding claim wherein the material of the electrodes (12, 14) is selected from the group consisting of metals, conductive resins and combinations thereof, wherein at least one of the electrodes comprises carbon nanotube films or carbon nanotube wire structures.

11. A plane heat source as claimed in any preceding claim further comprising:
a supporter, wherein the carbon nanotube film is disposed on a surface of the supporter.

12. A plane heat source as claimed in claim 11, further comprising:
a reflecting layer (17) disposed between the carbon nanotube structure and the supporter or disposed on a surface of the supporter, wherein the surface is opposite to the carbon nanotube structure.

13. A plane heat source as claimed in any preceding claim further comprising:
a protecting layer (15) disposed on the carbon nanotube structure and the at least two electrodes.

14. The plane heat source of any preceding claim, wherein the at least one carbon nanotube film comprises a plurality of successively oriented carbon nanotube segments (143), and the carbon nanotubes (145) in each carbon nanotube segment are parallel with each other.

## Patentansprüche

1. Eine flächige Wärmequelle (10), die Folgendes beinhaltet:
eine Kohlenstoffnanoröhrenstruktur (16); und
mindestens zwei Elektroden (12, 14), die getrennt und elektrisch mit der Kohlenstoffnanoröhrenstruktur verbunden sind,
wobei die Kohlenstoffnanoröhrenstruktur mindestens einen Kohlenstoffnanoröhrenfilm beinhaltet, der eine Vielzahl von Kohlenstoffstoffnanoröhren, die Ende an Ende aneinandergefügt sind und in einer gleichen Richtung orientiert sind, beinhaltet.

2. Flächige Wärmequelle gemäß Anspruch 1, wobei die Kohlenstoffnanoröhren gleichmäßig in der Kohlenstoffnanoröhrenstruktur verteilt sind.

3. Flächige Wärmequelle gemäß Anspruch 1 oder 2, wobei eine Dicke des Kohlenstoffnanoröhrenfilms von 0,5 Nanometer bis 100 Nanometer reicht.

4. Flächige Wärmequelle gemäß Anspruch 1, 2 oder 3, wobei die Kohlenstoffnanoröhrenstruktur (16) eine Vielzahl von miteinandergestapelten Kohlenstoffnanoröhrenfilmen beinhaltet.

5. Flächige Wärmequelle gemäß Anspruch 4, wobei die abgestimmten Richtungen der Kohlenstoffnanoröhren von zwei angrenzenden Kohlenstoffnanoröhrenfilmen gleich sind.

6. Flächige Wärmequelle gemäß Anspruch 4, wobei zwischen den abgestimmten Richtungen der Kohlenstoffnanoröhren von zwei angrenzenden Kohlenstoffnanoröhrenfilmen ein Winkel vorhanden ist und dieser Winkel im Bereich von über 0° bis 90° liegt.

7. Flächige Wärmequelle gemäß einem der vorhergehenden Ansprüche, wobei die Kohlenstoffnanoröhrenstruktur ferner eine Kohlenstoffnanoröhrendrahtstruktur (160), die auf einer Oberfläche des mindestens einen Kohlenstoffnanoröhrenfilms angeordnet ist, beinhaltet und wobei die Kohlenstoffnanoröhrendrahtstruktur mindestens einen Kohlenstoffnanoröhrendraht (161), der eine Vielzahl von aufeinanderfolgenden und orientierten Kohlenstoffnanoröhren beinhaltet, die Ende an Ende durch Van-der-Waals-Anziehungskräfte dazwischen aneinandergefügt sind, beinhaltet.

8. Flächige Wärmequelle gemäß Anspruch 7, wobei die Kohlenstoffnanoröhren in dem mindestens einen Kohlenstoffnanoröhrendraht (161) im Wesentlichen entlang einer Längsrichtung des mindestens einen Kohlenstoffnanoröhrendrahts abgestimmt sind.

9. Flächige Wärmequelle gemäß Anspruch 6 oder 7, wobei die mindestens zwei Elektroden (12, 14) auf der Kohlenstoffnanoröhrenstruktur angeordnet sind und die Kohlenstoffnanoröhren in den Kohlenstoffnanoröhrendrähten von einer Elektrode zu der anderen eingerichtet sind, um den Stromfluss zwischen den Elektroden zu maximieren.

10. Flächige Wärmequelle gemäß einem der vorhergehenden Ansprüche, wobei das Material der Elektroden (12, 14) aus der Gruppe ausgewählt ist, die aus Metallen, leitenden Harzen und Kombinationen davon besteht, wobei mindestens eine der Elektroden Kohlenstoffnanoröhrenfilme oder Kohlenstoffnanoröhrendrahtstrukturen beinhaltet.

11. Flächige Wärmequelle gemäß einem der vorhergehenden Ansprüche, die ferner Folgendes beinhaltet:
einen Träger, wobei der Kohlenstoffnanoröhrenfilm auf einer Oberfläche des Trägers angeordnet ist.

12. Flächige Wärmequelle gemäß Anspruch 11, die ferner Folgendes beinhaltet:
eine reflektierende Schicht (17), die zwischen der Kohlenstoffnanoröhrenstruktur und dem Träger angeordnet ist oder auf einer Oberfläche des Trägers angeordnet ist, wobei sich die Oberfläche gegenüber der Kohlenstoffnanoröhrenstruktur befindet.

13. Flächige Wärmequelle gemäß einem der vorhergehenden Ansprüche, die ferner Folgendes beinhaltet:
eine Schutzschicht (15), die auf der Kohlenstoffnanoröhrenstruktur und den mindestens zwei Elektroden angeordnet ist.

14. Flächige Wärmequelle gemäß einem der vorhergehenden Ansprüche, wobei der mindestens eine Kohlenstoffnanoröhrenfilm eine Vielzahl von aufeinanderfolgend orientierten Kohlenstoffnanoröhrensegmenten (143) beinhaltet und die Kohlenstoffnanoröhren (145) in jedem Kohlenstoffnanoröhrensegment parallel zueinander sind.

## Revendications

1. Une source de chaleur plane (10) comprenant :
une structure en nanotubes de carbone (16) ; et
au moins deux électrodes (12, 14) connectées séparément et électriquement à la structure en nanotubes de carbone,
dans laquelle la structure en nanotubes de carbone comprend au moins un film en nanotubes de carbone comprenant une pluralité de nanotubes de carbone joints bout à bout et orientés dans une même direction.

2. Une source de chaleur plane telle que revendiquée dans la revendication 1, dans laquelle les nanotubes de carbone sont répartis uniformément dans la structure en nanotubes de carbone.

3. Une source de chaleur plane telle que revendiquée dans la revendication 1 ou la revendication 2, dans laquelle une épaisseur du film de nanotubes de carbone est dans la gamme allant de 0,5 nanomètre à 100 nanomètres.

4. Une source de chaleur plane telle que revendiquée dans la revendication 1, la revendication 2 ou la revendication 3, dans laquelle la structure en nanotubes de carbone (16) comprend une pluralité de films de nanotubes de carbone empilés les uns avec les autres.

5. Une source de chaleur plane telle que revendiquée dans la revendication 4, dans laquelle les directions alignées des nanotubes de carbone de deux films de nanotubes de carbone adjacents sont les mêmes.

6. Une source de chaleur plane telle que revendiquée dans la revendication 4, dans laquelle un angle existe entre les directions alignées des nanotubes de carbone de deux films de nanotubes de carbone adjacents et l'angle se trouve dans la gamme allant de plus de 0° à 90°.

7. Une source de chaleur plane telle que revendiquée dans n'importe quelle revendication précédente, dans laquelle la structure en nanotubes de carbone comprend en outre une structure en fil de nanotubes de carbone (160) disposée sur une surface de cet au moins un film de nanotubes de carbone, et dans laquelle la structure en fil de nanotubes de carbone comprend au moins un fil de nanotubes de carbone (161) qui comprend une pluralité de nanotubes de carbone successifs et orientés joints bout à bout par la force d'attraction de Van der Waals entre ceux-ci.

8. Une source de chaleur plane telle que revendiquée dans la revendication 7, dans laquelle les nanotubes de carbone dans cet au moins un fil de nanotubes de carbone (161) sont substantiellement alignés suivant une direction en longueur de cet au moins un fil de nanotubes de carbone.

9. Une source de chaleur plane telle que revendiquée dans la revendication 6 ou la revendication 7 dans laquelle ces au moins deux électrodes (12, 14) sont disposées sur la structure en nanotubes de carbone, et les nanotubes de carbone dans les fils de nanotubes de carbone sont arrangés d'une électrode à l'autre de façon à maximiser un passage de courant entre les électrodes.

10. Une source de chaleur plane telle que revendiquée dans n'importe quelle revendication précédente dans laquelle le matériau des électrodes (12, 14) est sélectionné dans le groupe consistant en métaux, résines conductrices et combinaisons de ceux-ci, dans laquelle au moins une des électrodes comprend des films de nanotubes de carbone ou des structures en fil de nanotubes de carbone.

11. Une source de chaleur plane telle que revendiquée dans n'importe quelle revendication précédente comprenant en outre :
un support, dans laquelle le film de nanotubes de carbone est disposé sur une surface du support.

12. Une source de chaleur plane telle que revendiquée dans la revendication 11, comprenant en outre :
une couche réfléchissante (17) disposée entre la structure en nanotubes de carbone et le support ou disposée sur une surface du support, dans laquelle la surface est en face de la structure en nanotubes de carbone.

13. Une source de chaleur plane telle que revendiquée dans n'importe quelle revendication précédente comprenant en outre :
une couche de protection (15) disposée sur la structure en nanotubes de carbone et ces au moins deux électrodes.

14. La source de chaleur plane de n'importe quelle revendication précédente, dans laquelle cet au moins un film de nanotubes de carbone comprend une pluralité de segments de nanotubes de carbone successivement orientés (143), et les nanotubes de carbone (145) dans chaque segment de nanotubes de carbone sont parallèles les uns aux autres.
